# NEUE EUROPÄISCHE PATENTSCHRIFT

(11) **EP 0 317 903 B2**
(45) Veröffentlichungstag und Bekanntmachung des Hinweises auf die Entscheidung über den Einspruch: **08.07.1998**
(45) Hinweis auf die Patenterteilung: 03.02.1993
(21) Anmeldenummer: 88119161.3
(22) Anmeldetag: 18.11.1988
(51) Int. Cl.: F16J 15/32

(54) **Dichtring**
Sealing ring
Joint annulaire

(30) Priorität: 21.11.1987 DE 3739514
(43) Veröffentlichungstag der Anmeldung: 31.05.1989
(73) Patentinhaber: Kaco GmbH + Co., D-74072 Heilbronn (DE)
(72) Erfinder: Heinrich, Richard, D-7100 Heilbronn (DE)
(74) Vertreter: Jackisch-Kohl, Anna-Katharina

(56) Entgegenhaltungen:
- DE-A- 3 526 731
- DE-B- 1 273 286
- DE-C- 2 753 170
- DE-C- 3 613 220
- DE-U- 1 981 067
- FR-A- 1 056 617
- FR-A- 2 567 981
- GB-A- 569 821
- US-A- 2 485 011
- US-A- 2 819 106
- US-A- 3 917 286
- US-A- 4 243 232

## Beschreibung

Die Erfindung betrifft einen Dichtring nach dem Oberbegriff des Anspruches 1.

Bei diesem bekannten Dichtring (DE-A-35 26 731, DE-C-36 13 220) ist der an den Boden anschließende Wandabschnitt des Stützkörpers gegenüber dem vom Boden abgewandten Wandabschnitt radial nach innen versetzt. Der den Boden und den anschließenden, radial nach innen versetzten Wandabschnitt aufweisende Stützkörperteil ist von der Ummantelung aus elastomerem Material umgeben. Das Dichtteil ist als zusätzliches Teil an der Ummantelung des Stützkörpers befestigt. Beim Einsetzen des Dichtringes in den Einbauraum kommt er mit der Außenseite des in Einbaurichtung vorderen, vom Boden abgewandten Wandabschnittes des metallischen Stützkörpers in Berührung. Durch Schmutzteilchen an der Wandung des Einbauraumes kann der radial äußere Wandabschnitt des Stützkörpers beschädigt werden. So werden durch solche Schmutzteilchen Riefen in der Außenseite des Wandabschnittes gebildet, die zu Undichtigkeiten und schon nach kurzer Einsatzdauer zu einem Ausfall des Dichtringes führen.

Bei einem anderen bekannten Dichtring ist die Wand des Stützkörpers zylindrisch ausgebildet, der auf seiner gesamten Außenseite und auf seiner Stirnseite mit einer Ummantelung versehen ist. Sie besteht aus einem gummielastischen Werkstoff und erstreckt sich bis über einen Teil des Bodens des Stützkörpers. An ihm ist im Bereich einer Bohrung das Dichtteil befestigt, das aus dem gleichen gummielastischen Werkstoff wie die Ummantelung besteht. Bei diesem Dichtring kann zwar durch die vollständige Ummantelung der Außenseite der Stützkörperaußenwand ein guter Korrosionsschutz des metallischen Stützkörpers und eine hohe statische Dichtwirkung gewährleistet werden. Nachteilig ist aber, daß die elastische Ausbildung der Ummantelung keinen einwandfreien Sitz des Dichtringes im Einbauraum sicherstellt. An die Ummantelung und das Dichtteil, insbesondere seine Dichtlippe, werden unterschiedliche Anforderungen hinsichtlich der Reibungseigenschaften und des Widerstandes gegen das abzudichtende Medium gestellt, so daß durch die gleichen Werkstoffe von Ummantelung und Dichtteil eine gezielte Anpassung an die jeweiligen Erfordernisse nicht erreicht wird. Des weiteren ist keine kostengünstige Ausführung möglich, wenn aus Erfordernissen teure, hochwertige Werkstoffe für das dynamische Dichtteil notwendig sind, die dann auch im untergeordneten Funktionsbereich eingesetzt werden müssen.

Auch bei einem anderen bekannten Dichtring (GB 569 821) sind die Ummantelung des Stützkörpers und das Dichtteil aus demselben Werkstoff hergestellt. An die Dichtlippe des Dichtteils können Schmutzteilchen und dergleichen gelangen, die zu einem frühzeitigen Ausfall der Dichtlippe führen können.

Es sind Dichtringe bekannt (DE-1 273 286), bei denen der Stützkörper einen zylindrischen Mantel hat, der auf der Außenseite vollständig von der Ummantelung umgeben ist. Dadurch ist ein hoher Korrosionsschutz des Stützkörpers gewährleistet, jedoch ist infolge der elastischen Ausbildung der Ummantelung ein einwandfreier Sitz des Dichtringes im Einbauraum nicht sichergestellt. Darüber hinaus können an die Dichtlippe des Dichtteils Schmutzteilchen gelangen.

Der Dichtring nach der US-A-3 917 286 hat einen Stützkörper mit einer zylindrischen Wandung, die am freien Ende außen mit einer umlaufenden Vertiefung versehen ist. Sie nimmt die Ummantelung auf, die sich über die Stirnseite des Stützkörpers bis zu dessen Innenseite erstreckt. Die Ummantelung geht in das Dichtteil über, das die Dichtlippe aufweist. Die Vertiefung muß durch spanabhebende Bearbeitung hergestellt werden, wenn der Stützkörper aus Metall besteht. Hierbei geht jedoch Material verloren. Außerdem ist die Wandung des Stützkörpers im Bereich der Vertiefung verschwächt, so daß beim Einbau des Dichtringes die Gefahr besteht, daß der relativ dünne Wandabschnitt beschädigt wird. Im Bereich der Vertiefung hat die Ummantelung eine glatte Außenseite, so daß eine zuverlässige statische Abdichtung in der Einbaulage nicht gewährleistet ist. Da die Ummantelung und das Dichtteil aus demselben Werkstoff bestehen, ist eine gezielte Anpassung an die jeweiligen Erfordernisse nicht möglich. Insbesondere ist eine kostengünstige Ausbildung des Dichtringes nicht möglich, wenn aufgrund der Anforderungen an den Dichtring teure, hochwertige Werkstoffe für das dynamische Dichtteil erforderlich sind, die dann in untergeordneten Funktionsbereichen, insbesondere in der Ummantelung, eingesetzt werden müssen. Die Außenseite des Bodens ist zudem ohne Schutz, so daß die Gefahr der Korrosion besteht.

Es sind schließlich Dichtringe bekannt (DE-C2-27 53 170 und US-A-4 243 232), bei denen der Stützkörper einen Zylindermantel hat, dessen stirnseitiger Endbereich radial schräg nach innen verläuft und in der Wanddicke verringert ist. Der diesen abgewinkelten Endbereich überdekkende Teil der Ummantelung ist in Axialrichtung nur sehr kurz, so daß er eine einwandfreie statische Abdichtung nicht gewährleistet. Eine sichere Verankerung der Ummantelung am Zylindermantel des Stützkörpers ist nicht gewährleistet.

Der Erfindung liegt die Aufgabe zugrunde, den gattungsgemäßen Dichtring so auszubilden, daß eine einwandfreie statische Abdichtung und ein fester Sitz des Dichtringes im Einbauraum sichergestellt ist.

Diese Aufgabe wird beim gattungsgemäßen Dichtring erfindungsgemäß mit den kennzeichnenden Merkmalen des Anspruches 1 gelöst.

Beim erfindungsgemäßen Dichtring ist der vom Boden abgewandte Wandabschnitt des Stützkörpers gegenüber dem an den Boden anschließenden Wandabschnitt radial nach innen versetzt und an seiner Außenseite mit der Ummantelung versehen. Ihre Außenseite bildet mit der Außenseite des bodenseitigen Wandabschnittes eine gemeinsame Außenseite des Dichtringes. Infolge dieser Ausbildung wird erreicht, daß beim Einbau in den Einbauraum durch die in Einbaurichtung vorn liegende Ummantelung Schmutzteilchen, die sich an der Einbauwandung befinden, mitgenommen und entfernt werden. Dadurch wird verhindert, daß der anschließende Wandabschnitt des Stützkörpers durch solche Schmutzteilchen beschädigt wird. Nach dem Einbau ist darum die Außenseite dieses Wandabschnittes von Riefen frei, so daß eine einwandfreie Abdichtung in der Einbaulage gewährleistet ist. Da sich die Ummantelung über die Stirnseite des Stützkörpers hinweg bis an dessen Innenseite erstreckt und der außen liegende Teil der Ummantelung mit dem innen liegenden Teil durch die Durchtrittsöffnungen verbunden ist, wird beim Einpressen des Dichtringes in den Einbauraum zuverlässig verhindert, daß die Ummantelung vom Stützkörper abgezogen wird. Dadurch ist in der Einbaulage eine einwandfreie statische Abdichtung und ein fester Sitz des Dichtringes gewährleistet. Die weitere Ummantelung, die in das Dichtteil übergeht, bildet eine zusätzliche Verankerung des Dichtteils am Stützkörper und gewährleistet außerdem einen Korrosionsschutz des Stützkörperbodens, so daß der Dichtring eine über seine Lebensdauer hervorragende Dichtfunktion erfüllen kann. Die Staublippe verhindert den Zutritt von Schmutzteilchen an die Dichtlippe, so daß diese nicht frühzeitig verschleißt. Der erfindungsgemäße Dichtring läßt sich problemlos einbauen, wobei sichergestellt ist, daß eine einwandfreie statische und dynamische Abdichtung gewährleistet ist und der Dichtring fest im Einbauraum sitzt.

Weitere Vorteile der Erfindung ergeben sich aus den weiteren Ansprüchen und der Beschreibung.

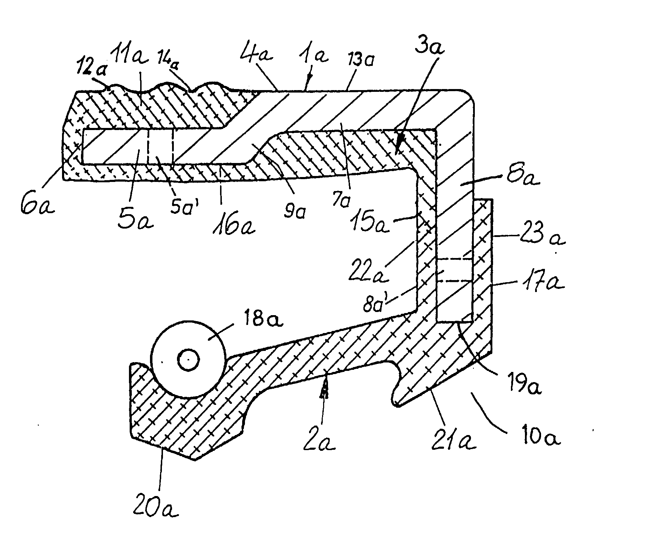

Die Erfindung wird anhand eines in der Zeichnung dargestellten Ausführungsbeispieles näher erläutert. Die Zeichnung zeigt im Schnitt einen Teil eines erfindungsgemäßen Dichtringes. Er ist im dargestellten Ausführungsbeispiel als Radialwellendichtring ausgebildet und besteht im wesentlichen aus einem napfförmigen Stützkörper 1a, einem Dichtteil 2a sowie einer Ummantelung 3a. Der Stützkörper 1a besteht aus Metall oder einem anderen harten Werkstoff. Er hat eine zylindrische Stützkörperaußenwand 4a, die etwa in halber axialer Länge radial nach innen abgesetzt ist, so daß ein erster, den freien Rand 6a des Stützkörpers aufweisender, radial nach innen abgesetzter Wandabschnitt 5a und ein im Durchmesser größerer Wandabschnitt 7a gebildet sind, der in einen Boden 8a des Stützkörpers 1a übergeht. Die Wandabschnitte gehen über eine Schulter 9a ineinander über. Der Boden 8a weist eine zentrale Durchtrittsöffnung 10a für die abzudichtende (nicht dargestellte) Welle auf.

Auf der Außenseite ist die Stützkörperaußenwand 4a bis zu ihrer Kröpfung bzw. bis zur Schulter 9a von einer Ummantelung 11a umgeben. Sie erstreckt sich über die ganze axiale Länge des Wandabschnittes 5a bis zur Schulter 9a und bildet mit ihrer Außenseite 12a eine Fortsetzung der Außenseite 13a des Wandabschnittes 7a. Dadurch liegt der Radialwellendichtring in seiner Einbaulage mit der Außenseite 13a des Wandabschnittes 7a und der Außenseite 12a der Ummantelung 11a an der Wandung des Einbauraumes an. Die Ummantelung besteht vorzugsweise aus Gummi. Dadurch ist ein mediumsdichter Sitz des Radialwellendichtringes im Einbauraum sichergestellt. Die Außenseite 12a der Ummantelung 11a ist vorzugsweise wellenförmig profiliert. Die durch die Profilierung gebildeten Rillen 14a werden beim Einpressen des Radialwellendichtringes in den Einbauraum elastisch verformt und sorgen damit für eine einwandfreie Dichtheit in der Berührungsfläche zwischen dem Radialwellendichtring und der Wandung des Einbauraumes.

Das Dichtteil 2a besteht wie die Ummantelung aus einem vorzugsweise gummielastischen Werkstoff. Die Ummantelung 11a und das Dichtteil 2a bestehen jedoch aus verschiedenartigen Werkstoffen. Das Dichtteil 2a ist vorzugsweise an den Boden 8a des Stützkörpers 1a anvulkanisiert, wobei es den Boden 8a an der Innenseite 22a mit einem Bodenteil 15a vollständig bedeckt. Die Ummantelung 11a verläuft bis zum Bodenteil 15a des Dichtteiles 2a, wobei sie den freien Rand 6a des Stützkörpers 1a umgibt und die Innenseite 16a der Stützkörperaußenwand 4a abdeckt. Dadurch ist die Ummantelung 11a sicher am Stützkörper 1a befestigt. Der Boden 8a ist auf seiner Außenseite 23a von einem äußeren Bodenteil 17a des Dichtteiles 2a teilweise bedeckt. Der Bodenteil 17a erstreckt sich bis über mehr als die halbe radiale Breite des Bodens 8a, so daß eine sichere Befestigung des Dichtteiles 2a am Stützkörper 1a gewährleistet ist. Die Materialien von Dichtteil 2a und Ummantelung 11a gehen durch Zusammenfließen ineinander über.

Das Dichtteil 2a erstreckt sich bis über den Rand 19a der Durchtrittsöffnung 10a. Durch die Ummantelung des Bodens 8a ist ein sicherer Halt des Dichtteiles 2a am Stützkörper 1a sowie ein guter Korrosionsschutz des Stützkörpers gewährleistet. Das Dichtteil 2a kann beispielsweise auch durch Ankleben am Stützkörper 1a befestigt sein. Zur sicheren Verbindung der Ummantelung 11a mit dem Stützkörper 1a können die Schulter 9a sowie der Wandabschnitt 5a und der Boden 8a mit Öffnungen 5a', 8a' versehen sein, in die das Material der Ummantelung bzw. des Dichtteils beim Anvulkanisieren fließt.

Das Dichtteil 2a weist eine Dichtlippe 20a sowie eine Staublippe 21a auf, die nahe des Bodens 8a vorgesehen ist. Die mit Abstand von der Staublippe 21a vorgesehene Dichtlippe 20a wird unter der Kraft einer Ringfeder 18a radial gegen die Welle gepreßt.

Die Ummantelung 11a kann auch aus zwei oder mehreren elastischen Werkstoffen, wie beispielsweise Naturgummi, synthetischer Gummi, Thermoelaste oder Thermoplaste, bestehen. Die Rillen 14a können senkrecht zur Achse des Wellendichtringes verlaufen oder auch schräg zu ihr geneigt sein. Die Rillen können auch auf einem gedachten Konus liegen, der sich von der Stirnseite des Wellendichtringes in Richtung auf den Boden 8a des Stützkörpers 1a verjüngt. Die Schulter 9a kann auch beliebig andere Form aufweisen.

Infolge der beschriebenen Teilummantelung des Stützkörpers 1a liegt der Dichtring mit einem Teil der Stützkörperaußenwand 4a und gleichzeitig mit der Ummantelung 11a an der Wand des Einbauraumes an. Dadurch ist einerseits ein sehr fester Sitz im Bereich der Stützkörperaußenwand 4a gewährleistet; andererseits wird durch die Ummantelung 11a auch eine gute statische Dichtheit sichergestellt. Da das Dichtteil 2a und damit seine Dichtlippe 20a aus einem anderen Werkstoff besteht als die Ummantelung, kann für das Dichtteil 2a ein Werkstoff gewählt werden, der optimal an die jeweiligen Erfordernisse angepaßt ist, so daß die Dichtlippe 20a zum Beispiel einerseits mit geringstmöglicher Reibung an der Gegenfläche anliegt, andererseits aber einen hohen Widerstand gegen das abzudichtende Medium aufweist. Dadurch kann kostenoptimal konstruiert werden, da für das hochbeanspruchte Dichtteil 2a entsprechend hochwertiger Werkstoff und für den untergeordneten Dichtbereich kostengünstigere, funktionell hoch geeignete Materialien verwendet werden können.

## Patentansprüche

1. Dichtring, insbesondere Radialwellendichtring, mit einer Staublippe (21a) und einem mindestens eine Dichtlippe (20a) aufweisenden Dichtteil (2a), das an einem napfförmigen Stützkörper (1a) befestigt ist, der außen und innen mindestens teilweise mit einer Ummantelung (11a) versehen ist und bei dem die Stützkörperaußenwand (4a) einen radial nach innen zurückversetzten Wandabschnitt (5a) aufweist, in dessen Bereich die Ummantelung (11a) außenseitig mindestens teilweise mit einer Profilierung (14a) versehen ist und mit der Außenseite des weiter außen liegenden Wandabschnittes (7a) eine gemeinsame Außenfläche bildet, wobei das Dichtteil (2a) und die Ummantelung (11a) aus verschiedenen elastischen Materialien bestehen und der radial nach innen zurückversetzte Wandabschnitt (5a) einen im Innendurchmesser verringerten Abschnitt des Stützkörpers (la) bildet, dessen Boden (8a) auf seiner Unterseite (23a) mindestens teilweise mit einer weiteren Ummantelung (17a) versehen ist,
dadurch gekennzeichnet,
a) daß der zurückversetzte Wandabschnitt (5a) den freien Rand (6a) der Stützkörperaußenwand (4a) aufweist und an der vom Boden (8a) des Stützkörpers (1a) abgewandteh Seite liegt,
b) daß der nach innen zurückversetzte Wandabschnitt (5a) des Stützkörpers (la) Durchtrittsöffnungen (5a') aufweist, durch welche der außen liegende Teil mit dem innen liegenden Teil der Ummantelung (11a) verbunden ist,
c) daß die den freien Rand (6a) der Stützkörperaußenwand (4a) umgebende Ummantelung (11a) bis zum Bodenteil (15a) des Dichtteiles (2a) verläuft und die Innenseite (16a) der Stützkörperaußenwand (4a) abdeckt,
d) daß die Ummantelungen (11a, 17a) und das Dichtteil (2a) durch Zusammenfließen miteinander verbunden sind, e) und daß die Staublippe (21a) durch das Dichtteil (2a) gebildet ist.

2. Dichtring nach Anspruch 1,
dadurch gekennzeichnet, daß sich die Ummantelung (11a) über einen Teil des Bodens (8a) des Stützkörpers (1a) erstreckt.

3. Dichtring nach Anspruch 1 oder 2,
dadurch gekennzeichnet, daß der Stützkörper (1a) in seinem Boden (8a) Öffnungen (8a') aufweist.

4. Dichtring nach einem der Ansprüche 1 bis 3,
dadurch gekennzeichnet, daß die Profilierung (14a) durch schräg zur Dichtringachse geneigt verlaufende Rillen gebildet ist.

5. Dichtring nach Anspruch 4,
dadurch gekennzeichnet, daß die Rillen (14a) auf einem gedachten Konus liegen, der sich von der Stirnseite des Stützkörpers (1a) aus in Richtung auf den Boden (8a) verjüngt.

6. Dichtring nach einem der Ansprüche 1 bis 5,
dadurch gekennzeichnet, daß die Ummantelung (11a) aus mindestens zwei, vorzugsweise mehreren, elastischen Werkstoffen besteht.

7. Dichtring nach einem der Ansprüche 1 bis 6,
dadurch gekennzeichnet, daß die Ummantelung (11a) aus einem elastischen Material, wie beispielsweise Naturgummi, synthetischer Gummi, Thermoelast oder Thermoplast, besteht.

## Claims

1. Sealing ring, in particular radial shaft sealing ring, with a dust lip (21a) and a sealing part (2a) comprising at least one sealing lip (20a), which is attached to a cup-shaped support member (1a), which is provided on the outside and inside at least partly with a casing (11a) and in which the outer wall (4a) of the support member has a wall section (5a) set back radially inwards, in the region of which the casing (11a) is provided on the outside at least partly with profiling (14a) and forms a common outer surface with the outer side of the wall section (7a) located further outwards, the sealing part (2a) and the casing (11a) consisting of different elastic materials and the wall section (5a) which is set back radially inwards forms a section of the support member (1a) of reduced inner diameter, whereof the base (8a) is provided on its under side (23a) at least partly with a further casing (17a), characterised in that,
a) the wall section (5a) which is set back comprises the free edge (6a) of the outer wall (4a) of the support member and bears against the side remote from the base (8a) of the support member (1a),
b) the wall section (5a) of the support member (1a) set back inwards comprises through openings (5a'), by which the outer part is connected to the inner part of the casing (11a),
c) the casing (11a) surrounding the free edge (6a) of the outer wall (4a) of the support member extends as far as the base part (15a) of the sealing part (2a) and covers the inner side (16a) of the outer wall (4a) of the support member,
d) the casings (11a, 17a) and the sealing part (2a) are connected to each other by coalescing,
e) and the dust lip (21a) is formed by the sealing part (2a).

2. Sealing ring according to Claim 1, characterised in that the casing (11a) extends over part of the base (8a) of the support member (1a).

3. Sealing ring according to Claim 1 or 2, characterised in that the support member (1a) comprises openings (8a') in its base (8a).

4. Sealing ring according to one of Claims 1 to 3, characterised in that the profiling (14a) is formed by grooves sloping obliquely with respect to the axis of the sealing ring.

5. Sealing ring according to Claim 4, characterised in that the grooves (14a) lie on an imaginary cone, which tapers from the end face of the support member (1a) in the direction of the base (8a).

6. Sealing ring according to one of Claims 1 to 5, characterised in that the casing (14a) consists of at least two, preferably several elastic materials.

7. Sealing ring according to one of Claims 1 to 6, characterised in that the casing (11a) consists of an elastic material, such as for example natural rubber, synthetic rubber, thermo-elastic or thermoplastic material.

## Revendications

1. Anneau d'étanchéité, en particulier bague à lèvres avec ressort, comprenant une lèvre anti-poussière (21a) et un élément d'étanchéité (2a) présentant au moins une lèvre d'étanchéité (20a), qui est fixé sur un corps d'appui (1a) en forme de cuvette, muni à l'extérieur et à l'intérieur au moins partiellement d'un revêtement (11a), et pour lequel la paroi extérieure (4) du corps d'appui présente une section de paroi (5a) radialement décalée vers l'intérieur, dans la région de laquelle le revêtement (11a) est muni du côté extérieur au moins en partie d'un profilage (14a) et forme avec la surface extérieure de la section de paroi (7a) située davantage vers l'extérieur, une surface extérieure commune, l'élément d'étanchéité (2a) et le revêtement (11a) étant constitués de matériaux élastiques différents et la section de paroi (5a) radialement décalée vers l'intérieur formant une section de diamètre interne réduit du corps d'appui (1a), dont le fond (8a) est partiellement muni, sur sa face extérieure (23a), d'un autre revêtement (17a),
caractérisé :
a) en ce que la section de paroi (5a) en retrait comporte le bord libre (6a) de la paroi extérieure (4a) du corps d'appui et se situe du côté opposé au fond (8a) dudit corps d'appui (1a) ;
b) en ce que la section de paroi (5a) décalée vers l'intérieur du corps d'appui (1a) est munie d'ouvertures de passage (5a') par lesquelles l'élément situé vers l'extérieur est relié à l'élément situé vers l'intérieur du revêtement (11a) ;
c) en ce que le revêtement (11a) enveloppant le bord libre (6a) de la paroi extérieure (4a) du corps d'appui s'étend jusqu'à l'élément de fond (15a) de l'élément d'étanchéité (2a) et recouvre la face intérieure (16a) de la paroi extérieure (4a) du corps d'appui ;
d) en ce que les revêtements (11a, 17a) et l'élément d'étanchéité (2a) sont réunis par fluage ;
e) et en ce que la lèvre anti-poussière (21a) est constituée par l'élément d'étanchéité (2a).

2. Anneau d'étanchéité selon la revendication 1, caractérisé en ce que le revêtement (11a) s'étend sur au moins une partie du fond (8a) du corps d'appui (1a).

3. Anneau d'étanchéité selon la revendication 1 ou 2, caractérisé en ce que le corps d'appui (1a) est muni d'ouvertures (8a') dans son fond (8a).

4. Anneau d'étanchéité selon l'une des revendications 1 à 3, caractérisé en ce que le profilage (14a) est formé par des gorges inclinées vers l'axe de l'anneau d'étanchéité.

5. Anneau d'étanchéité selon la revendication 4, caractérisé en ce que les gorges (14a) se situent sur un cône imaginaire qui se rétrécit à partir de la face frontale du corps d'appui (1a) en direction du fond (8a).

6. Anneau d'étanchéité selon l'une ces revendications 1 à 5, caractérisé en ce que le revêtement (11a) est constitué d'au moins deux, de préférence d'un nombre supérieur de matériaux élastiques.

7. Anneau d'étanchéité selon l'une ces revendications 1 à 6, caractérisé en ce que le revêtement (11a) est constitué d'un matériau élastique tel que du caoutchouc naturel, du caoutchouc synthétique, d'une matière thermo-élastique ou thermoplastique.
